Europäisches Patentamt

European Patent Office

Office européen des brevets

(19)

(11) Veröffentlichungsnummer : **0 414 210 B1**

# (12) EUROPÄISCHE PATENTSCHRIFT

(45) Veröffentlichungstag der Patentschrift :
**01.12.93 Patentblatt 93/48**

(51) Int. Cl.$^5$ : **B65G 47/68,** B65G 47/66

(21) Anmeldenummer : **90116012.7**

(22) Anmeldetag : **21.08.90**

(54) **Verfahren und Vorrichtung zum Umformen eines mehrspurigen Behälterstromes in einen einspurigen Behälterstrom.**

(30) Priorität : **24.08.89 DE 3928017**

(43) Veröffentlichungstag der Anmeldung :
**27.02.91 Patentblatt 91/09**

(45) Bekanntmachung des Hinweises auf die
Patenterteilung :
**01.12.93 Patentblatt 93/48**

(84) Benannte Vertragsstaaten :
**AT BE CH DE DK ES FR GB GR IT LI LU NL SE**

(56) Entgegenhaltungen :
EP-A- 0 175 292
EP-A- 0 191 584
EP-A- 0 237 149
EP-A- 0 252 461
DE-A- 3 446 461

(73) Patentinhaber : **KRONES AG Hermann
Kronseder Maschinenfabrik
Böhmerwaldstrasse 5 Postfach 1230
D-93068 Neutraubling (DE)**

(72) Erfinder : **Meindl, Theodor
Hans-Carossa-Strasse 4
D-8442 Geiselhöring (DE)**

(74) Vertreter : **Patentanwälte Grünecker,
Kinkeldey, Stockmair & Partner
Maximilianstrasse 58
D-80538 München (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Vorrichtung und ein Verfahren zum Umformen eines mehrspurigen Behälterstromes in einen einspurigen Behälterstrom gemäß den Oberbegriffen der Ansprüche 1 und 4.

Beim Abfüllen von Getränken, Fertiggerichten usw. in Behälter, z.B. Glasflaschen, Gläser, Blechdosen, Kunststofflaschen und Kunststoffdosen kommt es häufig vor, daß ein Strom von z.B. drei, vier oder mehr parallel angeförderten Behältern zur Verarbeitung in einer Maschine, z.B. in einer Etikettiermaschine, in einen Strom von einzelnen Behältern umgeformt werden muß. Insbesondere bei der Verarbeitung von Glasflaschen und Glasbehältern bereitet dieses Umformen erhebliche Probleme, da die dadurch hervorgerufenen Stoßvorgänge zwischen den einzelnen Flaschen bzw. Behältern zu einem erheblichen Lärmpegel führen, der weit über den gesundheitlich zulässigen Grenzwerten liegen kann. Des weiteren können die Stoßvorgänge zu einem größeren Verschleiß der Glasbehälter selbst und auch zum Bruch führen, wodurch die Produktivität einer solchen Anlage vermindert wird.

Ein Verfahren und eine Vorrichtung, durch die diese Probleme gelöst werden, ist in der EP-A-0 085 184 beschrieben. Bei dieser Vorrichtung ist parallel zu einem Zuförderer, auf dem die Flaschen z.B. in Viererreihen zugefördert werden, ein Zwischenförderer vorgesehen, neben dem wiederum parallel ein Abförderer, der die vereinzelten Behälter abfördert, angeordnet ist. Der Zwischenförderer besteht aus mehreren parallelen, nebeneinanderliegenden, zum Abförderer hin stufenweise mit höherer Geschwindigkeit angetriebenen Förderabschnitten. Der Zwischenförderer sowie der Zuförderer in seinem neben dem Zwischenförderer befindlichen Endbereich und der Abförderer im an den Zwischenförderer anschließenden Bereich sind in einem solchen Maße geneigt, daß die Flaschen infolge des Hangabtriebes über die nebeneinanderliegenden Förderabschnitte des Zwischenförderers gleiten. Ein talseitiges Geländer des Zuförderers geht im Bereich des Zwischenförderers in eine Leitfläche über, die als die Flaschen auf der tieferliegenden Seite des Zwischenförderers abstützende Fläche ausgebildet ist und in ein talseitiges Geländer des Abförderers mündet. Die Neigung des Zwischenförderers, des Zuförderers und Abförderers im entsprechenden Bereich beträgt ungefähr 10 bis 12°. Durch die seitliche Überführung der Behälter auf die jeweils schneller laufenden Bänder des Zwischenförderers unter dem Einfluß des Hangabtriebes werden die Flaschen unter gegenseitiger Abstützung sanft und schonend beschleunigt. Die Vorrichtung ist z.B. in zahlreichen Flaschenabfüllbetrieben im Einsatz und erlaubt es, bis zu 110.000 Flaschen pro Stunde mit geringem Flaschenabrieb und geringer Lärmentwicklung zu verarbeiten.

Die hohe Verarbeitungskapazität dieser Vorrichtung erweist sich jedoch als nachteilig, wenn für kleinere Abfüllanlagen Vorrichtungen benötigt werden, die nur eine Verarbeitungskapazität bis ca. 20.000 Flaschen oder Behälter pro Stunde erfordern. Bei diesen geringen Kapazitäten ist der Platzbedarf und der Bauaufwand der bekannten Vorrichtung zu groß. Es ist deshalb bislang nicht gelungen, die Vorteile dieser Lösung, insbesondere also der geringe Lärmpegel, der geringe Verschleiß und die geringe Glasbruchgefahr auf Anlagen kleinerer Kapazität zu übertragen.

Eine Vorrichtung, die für derartige kleinere Anlagen konzipiert ist, ist mit der EP-A-0 175 292 bekannt geworden. Bei dieser Vorrichtung sind der Zwischenförderer und der Abförderer parallel zueinander angeordnet und schließen sich in ihrer Gesamtheit unmittelbar stumpf an den Zuförderer an. Sowohl der Zuförderer als auch der Zwischenförderer und der Abförderer sind in einem Winkel von 11° geneigt. Ein talseitiges Geländer am Zuförderer wird gradlinig im Abförderer fortgesetzt. Die Übergabe der Flaschen vom Zuförderer zum Zwischenförderer und Abförderer erfolgt über Gleitbleche, auf die die Flaschen vom Zuförderer aufgeschoben werden. Die Flaschen werden dann durch die nachfolgenden Flaschen über das Gleitblech geschoben und werden vom Zwischenförderer bzw. vom Abförderer aufgenommen.

Diese Vorrichtung hat jedoch einen sehr wesentlichen Nachteil. Kommen z.B. auf dem Zuförderer vier Reihen von parallel angeordneten Flaschen mit einer Geschwindigkeit $V_{zu}$ an, so muß der Abförderer, um diesen Strom bewältigen zu können, eine Geschwindigkeit $V_{ab}$ aufweisen, die viermal so groß ist wie die Zuführgeschwindigkeit Vzu. Laufen die Bänder des Zuförderers und des Zwischenförderers nun, wie es in der EP-A-0 175 292 vorgeschlagen wird, alle untereinander mit gleicher Geschwindigkeit, werden die Flaschen, die vom Gleitblech aus im wesentlichen mit der Geschwindigkeit $V_o$ auf die entsprechenden Transportbänder des Zwischenförderers bzw. des Abförderers aufgeschoben werden, auf ein Vierfaches dieser Geschwindigkeit beschleunigt. Die für die Beschleunigung zur Verfügung stehende Wegstrecke beim Abschieben vom Gleitblech auf das entsprechende Transportband ist aber relativ kurz, so daß hier sehr hohe Beschleunigungswerte auftreten. Die Kraft für diese Beschleunigung greift als Reibungskraft ausschließlich am Boden der Flasche an. Da der Schwerpunkt der Flaschen oberhalb des Angriffspunktes,dieser die Beschleunigung bewirkenden Reibungskraft ist, führen die Flaschen beim Beschleunigen eine Kippbewegung in Richtung auf den Zuförderer aus. Durch diese Kippbewegung ergibt sich zum einen ein Zusammenstoßen mit den nachfolgenden Flaschen, welches zu einer hohen Lärmentwicklung führt und die Gefahr des Glasbruches erhöht. Des weiteren besteht die Gefahr, daß die Flaschen infolge der Kippbewegung auf dem Band umfallen, wodurch die Produktivität be-

2

einträchtigt und der Ausschuß erhöht wird. Auch wenn, wie dies in einer alternativen Ausführungsform in der EP-A-0 175 292 beschrieben ist, die Transportbänder des Zwischenförderers mit einer abgestuften Geschwindigkeit umlaufen, werden diese Nachteile nur teilweise vermindert. Die Ausführung gemäß der EP-A 175 292 hat sich deshalb bislang nicht in der Praxis durchsetzen können.

Der vorliegenden Erfindung liegt die Aufgabe zugrunde, ein Verfahren anzugeben, mit der das Einreihen von in mehreren Reihen zugeförderten Behältern in eine Reihe bei geringem Lärmpegel, bei geringem Verschleiß und Ausschuß der Behälter und bei hoher Betriebssicherheit möglich ist. Des weiteren liegt der vorliegenden Erfindung die Aufgabe zugrunde, eine Vorrichtung zur Durchführung des erfindungsgemäßen Verfahrens zu schaffen, welche einen geringen Raumbedarf hat und welche kostengünstig zu fertigen ist.

Das erfindungsgemäße Verfahren ist Gegenstand des Anspruchs 1. Die erfindungsgemäße Vorrichtung ist Gegenstandes des Anspruchs 4.

Das erfindungsgemäße Verfahren ermöglicht ein geräuscharmes und stoßarmes Vereinzeln der auf dem Zuförderer angeförderten Behälter. Durch die mit unterschiedlicher Geschwindigkeit laufenden Transportbänder des Zwischenförderers werden die angeförderten Behälter beschleunigt. Gleichzeitig werden die weiter oben (bergseitig) transportierten Behälter infolge des Hangabtriebes nach unten geschoben. Da die Geschwindigkeit der weiter talwärts angeordneten Transportbänder höher ist, als die der bergseitig angeordneten, und der Zuförderer stumpf an den Zwischenförderer anschließt, entstehen auf den unteren Transportbändern durch die Beschleunigung der Behälter beim Überschieben vom Überschubblech auf den Zwischenförderer größere Lücken, in die sich die auf den oberen Transportbändern transportierten Flaschen sanft und ohne große Geräusche eingliedern. Da die Geschwindigkeit aller Bänder des Zwischenförderers geringer ist, als die Geschwindigkeit des Abförderers, wird die Beschleunigung beim Übertritt der Behälter vom Überschubblech begrenzt, so daß die Kippbewegung beim Beschleunigen der Flaschen und die Gefahr des Umfallens der Flaschen bei diesem Beschleunigen wesentlich vermindert werden.

Die Neigung von Zuförderer, Zwischenförderer und Abförderer beträgt vorzugsweise zwischen 10 - 12°, wie dies im Stand der Technik an sich bekannt ist.

Gemäß einer Weiterbildung der Erfindung sind die Geschwindigkeitverhältnisse des Zwischenförderers so gestaltet, daß die Geschwindigkeit des am weitesten bergseitig liegenden Transportbandes größer ist als die Geschwindigkeit des Zuförderers. Durch diese Gestaltung können die Beschleunigungen der Flaschen in den einzelnen Spuren vorteilhaft verteilt und das sanfte Eingliedern der von der Bergseite abrutschenden Flaschen in die talwärts gelegenen Flaschenreihen erleichtert werden.

Die erfindungsgemäße Vorrichtung hat, neben den in bezug auf das Verfahren beschriebenen funktionalen Vorteilen den Vorteil, daß sie mit einem deutlich geringeren Platzbedarf auskommt, als eine Vorrichtung gemäß der EP-B- 0 085 184. Dies wird dadurch bewirkt, daß der Zwischenförderer nicht parallel zum Zuförderer angeordnet ist, sondern sich unmitelbar stumpf an diesen anschließt.

Gemäß einer zu bevorzugenden Weiterbildung der Erfindung ist der Abförderer parallel zum Zwischenförderer angeordnet und weist im wesentlichen eine solche Länge auf, daß er sich über die gesamte Länge des Zwischenförderers erstreckt. Diese Bauweise hat den Vorteil, daß ein sanfter Übergang mit geringen Beschleunigungswerten vom talseitigsten Band des Zwischenförderers auf den Abförderer möglich ist. Außerdem führt diese Bauweise zu einer weiteren Verminderung des Platzbedarfes der Anlage.

In einer weiteren zu bevorzugenden Weiterbildung der Erfindung ist die Breite des Zuförderers gleich der Breite des Zwischenförderers. Auch hierdurch wird eine Reduzierung des Platzbedarfes und des Bauaufwandes der Vorichtung erzielt.

Gemäß einer weiteren Ausführungsform der Erfindung, weisen die Transportbänder des Zwischenförderers eine unterschiedliche Länge auf, wobei das talseitige Transportband am längsten und das bergseitige Transportband am kürzesten ist. Diese Bauweise nutzt den Effekt aus, daß das Eingliedern der Behälter von den bergseitigen Transportbändern schneller erfolgt als an dem am weitesten talseitig gelegenen Transportband des Zwischenförderers. Durch diese Bauweise wird eine weitere Verminderung des Platzbedarfes und auch eine wesentliche Verminderung des Bau- und Materialaufwandes für die Vorrichtung erzielt.

Gemäß einer weiteren Ausführung der Erfindung ist im Bereich des Überschubbleches am bergseitigen Transportband des Zwischenförderers ein Geländer vorgesehen, welches sich in einem leichten Bogen über dieses Transportband erstreckt. Dieses Geländer bringt den Vorteil, daß das Überführen der Flaschen vom bergseitigen zum talseitigen Bereich beschleunigt und der Hangabtrieb unterstützt wird.

Gemäß einer weiteren zu bevorzugenden Ausführungsform ist auch im unteren, talseitigen Bereich des Zwischenförderers ein solches, leicht gebogenes Geländer vorgesehen. Dieses Geländer schließt im wesentlichen das talseitige Transportband des Zwischenförderers ab und geht asymptotisch in das bergseitige Geländer des Abförderers über.

Beide Geländer haben den Vorteil, daß das Übergleiten der Behälter von der Bergseite zur Talseite unterstützt wird. Des weiteren ist es dadurch möglich, auf einen Sicherheitsbereich innerhalb des Zwischenförderers zu verzichten und den Zwischenförderer relativ kurz zu gestalten. Dadurch wird der Platzbedarf und der Bauaufwand für die Vorrichtung weiter vermindert.

Die erfindungsgemäße Vorrichtung eignet sich zum Vereinzeln von Behältern aller Art. Eine bevorzugte Verwendung ist die Vereinzelung von Flaschen, vorzugsweise von Glasflaschen.

Weitere Vorteile, Merkmale und Anwendungsmöglichkeiten der vorliegenden Erfindung ergeben sich aus den Unteransprüchen und aus der nachfolgenden Beschreibung von Ausführungsbeispielen im Zusammenhang mit der Zeichnung. Darin zeigen:

Figur 1        ein erstes Ausführungsbeispiel der erfindungsgemäßen Vorrichtung,

Figur 2        ein zweites Ausführungsbeispiel der erfindungsgemäßen Vorrichtung.

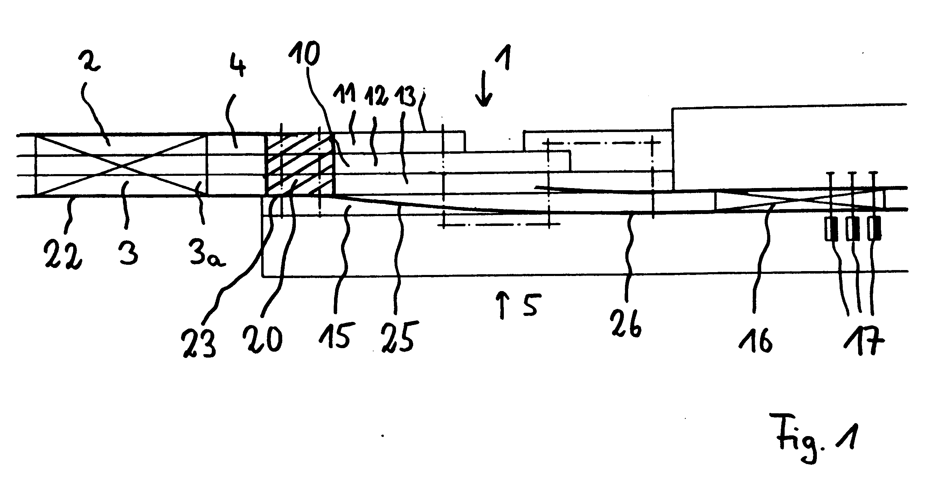

Ein erstes Ausführungsbeispiel der erfindungsgemäßen Vorrichtung wird in Bezug auf die Figur 1 beschrieben. Dieses Ausführungsbeispiel ist speziell für das Vereinzeln von Flaschen gedacht. Es soll jedoch darauf hingewiesen werden, daß eine derartige Vorrichtung ohne Änderung auch für das Vereinzeln von Behältern unterschiedlichster Art, wie z.B. von Glasbehältern, Kunststoffdosen, Blechdosen usw. eingesetzt werden kann.

Die in ihrer Gesamtheit mit 1 bezeichnete Vorrichtung weist einen Zuförderer 2 auf, auf dem die Flaschen, im vorliegenden Fall in drei Spuren, zugefördert werden. Der Zuförderer ist als Förderband ausgebildet, wobei die Flaschen auf dem Obertrum des Förderbandes stehen, wie es im Stand der Technik allgemein bekannt und üblich ist.

Das Förderband ist im Bereich 3, der vor dem Vereinzelungsbereich 5 liegt, in sich verwunden, wobei diese Verwindung derart gestaltet ist, daß am Ende des Verrwindungsbereiches 3a eine Neigung zur horizontalen Ebene von 10 - 12, vorzugsweise 11° erzielt wird. Das Förderband wird anschließend im Bereich 4 mit diesem Winkel weitergeführt.

An den Zuförderer schließt sich, mit der gleichen Winkelneigung wie der Zuförderer, der Zwischenförderer 10 an. Der Zwischenförderer 10 besteht im vorliegenden Fall aus drei einzelnen Transportbändern 11, 12, 13, wobei die Behälter jeweils aufrechtstehend auf dem Obertrum des Zwischenförderers transportiert werden.

Parallel zum Zwischenförderer ist der Abförderer 15 angeordnet, der ebenfalls aus einem Transportband besteht, auf dem die Behälter aufrechtstehend transportiert werden. Der Abförderer 15 ist im gleichen Winkel wie der Zuförderer und der Zwischenförderer zur Horizontalen geneigt. In einem Bereich, der hinter dem Zwischenförderer liegt, befindet sich ein Gegenverwindungsbereich 16 des Abförderers 15, in dem das Transportband wieder horizontal gestellt wird, so daß die Flaschen dann in senkrechter Stellung der nachfolgenden (nicht dargestellten) Verarbeitungsmaschine zugeführt werden können. Beim vorliegenden Ausführungsbeispiel sind im Gegenverwindungsbereich Lichtschranken 17 angeordnet, die Anzahl und Abstand der ankommenden Einzelbehälter erfassen und die über einen Mikrorechner die Geschwindigkeit der Anlage in Abhängigkeit dieser Werte regeln.

Zwischen dem Zuförderer 2 und dem Zwischenförderer 10 ist ein Überschubblech 20 angeordnet, auf das die ankommenden Behälter vom Zuförderer aufgeschoben werden. Weiterhin weist der Zuförderer 2 ein talseitiges Geländer 22 auf, an das sich ein gradliniges Geländerstück oder Abstützblech 23 im vorderen (dem Zuförderer benachbarten) Bereich des Überschubbleches fortsetzt. Im Anschluß daran wird das Geländer in einem Bogen 25 über den Abförderer 15 geführt und läuft in das talseitige Geländer 26 des Abförderers aus.

Die Geschwindigkeitsverhältnisse der Vorrichtung sind wie folgt: Es wird vorausgesetzt, daß durch den Zuförderer n Reihen parallel angeordneter Behälter mit einer Geschwindigkeit $V_{zu}$ zugeführt werden. Die Geschwindigkeit des Abförderers $V_{ab}$ beträgt dann n x $V_{zu}$. Weist der Zwischenförderer m einzelne Bänder auf, wobei das Band Nr. 1 an der Bergseite des Zwischenförderers angeordnet ist und das Band mit der Nummer m an dessen Talseite, so ergibt sich eine Geschwindigkeitsverteilung von

$$V_{zu} < V_1 < V_2 ... < V_m \text{ und } < V_{ab}.$$

Werden, wie im folgenden Ausführungsbeispiel, drei Reihen von Behältern zugeführt und drei Transportbänder im Zwischenförderer verwendet, so gilt

$$V_{ab} = \text{mind. } 3 \times V_{zu} \text{ und}$$
$$V_{zu} < V_1 < V_2 < V_3 < V_{ab}$$

Durch diesen Aufbau und diese Geschwindigkeitsverteilung ergibt sich folgende Funktion der Anlage, wobei entsprechend dem Ausführungsbeispiel vorausgesetzt wird, daß drei Flaschenreihen vereinzelt werden sollen.

Die auf dem Zuförderer ankommenden horizontalen Flaschenreihen werden im Bereich 3 des Zuförderers um 11° zur Horizontalen geneigt und laufen auf das ebenfalls horizontal geneigte Überschubblech 20 auf. Ein Abgleiten der Flaschen in diesem Bereich wird durch das Geländer 22 bzw. 23 verhindert. Aufgrund der Neigung des Bandes liegen alle Flaschen aneinander an, so daß zufällige Stöße der Flaschen während der Bewegung vermieden werden. Die Flaschen werden auf das Überschubblech aufgeschoben und durch die nachfolgenden Flaschen mit der Geschwindigkeit Vzu weiter zum Zwischenförderer befördert. Die einzelnen Flaschen erreichen dann den Zwischenförderer und werden vom Zwischenförderer beschleunigt. Da die Bänder 11, 12 und 13 mit einer höheren Geschwindigkeit laufen, als die Zufördergeschwindigkeit, werden die Flaschen auf eine höhere Geschwindigkeit beschleunigt, so daß sich der Abstand der auf einer Spur befindlichen Flaschen zueinander vergrößert. Da die Geschwindigkeit des Bandes 13 größer ist als die Geschwindigkeit des Bandes 12 und die wiederum größer ist als die Geschwindigkeit des Bandes 11 ist der Abstand der Flaschen auf dem Band 13 größer als der Abstand der Flaschen auf dem Band 12 und dieser wiederum größer als der Abstand der Flaschen auf dem Band 11. Infolge des Hangabtriebes gleiten nun die Flaschen vom Band 11 auf das Band 12 und die Flaschen vom Band 12 auf das Band 13. Die Flaschen vom Band 13 wiederum gleiten infolge des Hangabtriebes auf das Abförderband 15, durch welches sie auf die Abfördergeschwindigkeit $V_{ab}$ beschleunigt werden. Die Beschleunigung auf die Höchstgeschwindigkeit findet somit im Bereich zwischen dem talseitigen, schnellsten, Zwischenförderband und dem Abförderband statt. Dadurch können die Geschwindigkeitsdifferenzen am Überschubblech geringer gehalten werden und die Gefahr einer Kippbewegung der Flaschen vermieden werden.

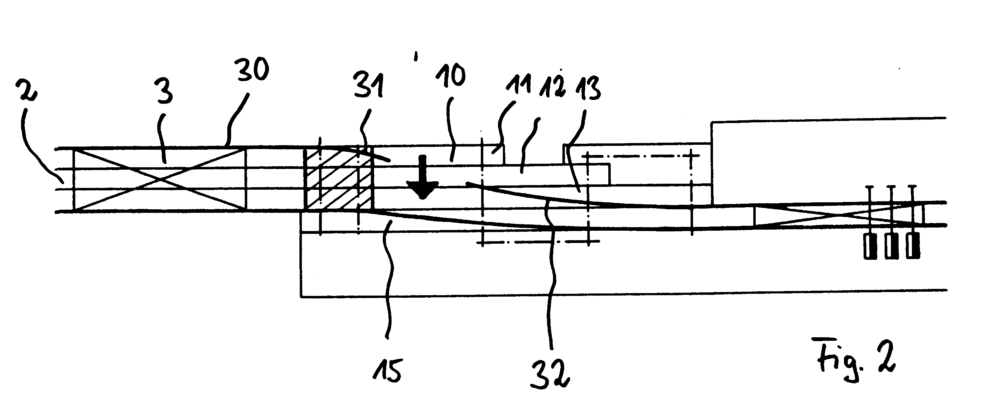

Figur 2 zeigt ein alternatives Ausführungsbeispiel, das in den meisten Punkten mit dem Ausführungsbeispiel der Figur 1 übereinstimmt. Im Unterschied zur Gestaltung gemäß Figur 1 ist hier jedoch im Zwischenförderbereich auch ein bergseitiges Stützgeländer vorgesehen, wobei ein erstes Stützgeländer 31 vorgesehen ist, welches das bergseitige Stützgeländer 30 des Zuförderers fortsetzt und welches in sanftem Bogen über das erste Zwischenförderband 11 geschwungen ist. Weiterhin ist ein zweites Stützgeländer 32 vorgesehen, welches ebenfalls im Bogen über das unterste, talseitige Zwischenförderband geführt ist. Die Stützgeländer unterstützen die Wirkung des Hangabtriebes und stellen sicher, daß keine Flasche über die entsprechenden Stellen im Zwischenförderbereich gefördert werden. Durch das Vorsehen dieser Geländer ist es möglich, den Zwischenförderbereich weiter zu verkürzen und damit den Raumbedarf der Anlage weiter zu verringern.

## Patentansprüche

1. Verfahren zum Überführen eines in Reihen nebeneinander auf einem Zuförderer (2) geförderten Stromes von aufrechtstehenden Behältern in eine einzelne, von einem Abförderer (15) weggeförderten Reihe unter Verwendung einer aus mehreren parallel zueinander angeordneten Transportbändern (11, 12, 13) bestehenden Zwischenfördereinrichtung (10), wobei Zuförderer, Zwischenförderer und Abförderer im Überführungsbereich zur Erzeugung eines Hangabtriebes quer zur Förderrichtung geneigt sind und wobei ein Stützgeländer (22, 23, 25, 26) vorgesehen ist, das von der Talseite des Zuförderers über das Transportband des Abförderers zur Talseite des Abförderers hinweg geführt ist, und wobei die Geschwindigkeit jedes bergseitig angeordneten Transportbandes des Zwischenförderers kleiner ist, als die Geschwindigkeit des talwärts benachbarten Transportbandes, dadurch **gekennzeichnet,** daß die auf dem Zuförderer ankommenden Behälter im wesentlichen unter Beibehaltung ihrer Spurlage auf ein Überschubblech (20) aufgeschoben werden, daß alle Behälter dann, wiederum im wesentlichen unter Beibehaltung ihrer Spurlage auf den Zwischenförderer aufgeschoben werden, daß die Behälter beim Aufschieben auf den Zwischenförderer auf eine Geschwindigkeit beschleunigt werden, die kleiner ist als die Geschwindigkeit des Abförderers, und daß der Spurwechsel der Behälter von den bergseitigen Transportbändern des Zwischenförderers zu den talseitigen Transportbändern des Zwischenförderers und vom am weitesten talwärts gelegenen Transportband des Zwischenförderers zum Abförderer im wesentlichen infolge des durch die Winkelneigung erzeugten Hangabtriebes bewirkt wird.

2. Verfahren gemäß Anspruch 1, dadurch **gekennzeichnet,** daß die Winkelneigung von Zuförderer, Zwischenförderer und Abförderer zur Horizontalen zwischen 10 bis 12° beträgt.

3. Verfahren gemäß Anspruch 1 oder 2, dadurch **gekennzeichnet,** daß die Geschwindigkeit des am langsamsten laufenden Transportbandes des Zwischenförderes größer ist, als die Geschwindigkeit des Zuförderers.

4. Vorrichtung zum Überführen eines in Reihen nebeneinander auf einem Zuförderer (2) zugeförderten Stromes von aufrechtstehenden Behältern in eine einzelne, von einem Abförderer (15) weggeförderten Reihe, mit einer aus mehreren parallel zueinander angeordneten Transportbändern (11, 12, 13) bestehenden Zwischenfördereinrichtung (10), wobei Zuförderer, Zwischenförderer und Abförderer im Überführungsbereich zur Erzeugung eines Hangabtriebes quer zur Förderrichtung geneigt sind, und wobei ein Stützgeländer (22, 23, 25) vorgesehen ist, das von der Talseite des Zuförderers über das Band des Abförderers hinweg zur Talseite des Abförderers geführt ist, und wobei die Geschwindigkeit jedes bergseitig angeordneten Transportbandes des Zwischenförderers kleiner ist, als die Geschwindigkeit des talwärts benachbarten Transportbandes,
dadurch **gekennzeichnet,**
daß die Gesamtbreite des Zwischenförderers gleich oder größer ist als die Gesamtbreite des Zuförderers, daß der Zuförderer über seine gesamte Breite stumpf an den Zwischenförderer anschließt, wobei die bergseitige Begrenzung des Zuförderers geradlinig in die bergseitige Begrenzung des Zwischenförderers übergeht,
daß zwischen dem Zuförderer und dem Zwischenförderer ein Überschubblech (20) vorgesehen ist, und daß die Geschwindigkeit des Abförderers größer ist als die Geschwindigkeit des am weitesten talwärts gelegenen Transportbandes (13) des Zwischenförderers.

5. Vorrichtung gemäß Anspruch 4,
dadurch **gekennzeichnet,**
daß die Neigung von Zuförderer, Zwischenförderer und Abförderer gegenüber der Horizontalen zwischen 10 und 12° beträgt.

6. Vorrichtung gemäß einem der Ansprüche 4 oder 5,
dadurch **gekennzeichnet,**
daß der Abförderer (15) parallel zum Zwischenförderer angeordnet ist und daß seine Längserstreckung in Bezug zum Zwischenförderer (10) im wesentlichen so bemessen ist, daß seine dem Zuförderer (2) zugewandte Umlenkung im Bereich des Überschubbleches (20) liegt.

7. Vorrichtung gemäß mindestens einem der Ansprüche 4 bis 6,
dadurch **gekennzeichnet,**
daß die Breite des Zuförderers (2) gleich der Breite des Zwischenförderers (10) ist.

8. Vorrichtung gemäß mindestens einem der Ansprüche 4 bis 7,
dadurch **gekennzeichnet,**
daß die Transportbänder (11, 12, 13) des Zwischenförderer (10) eine unterschiedliche Länge aufweisen, wobei die Länge jedes bergseitigen (11, 12) Transportbandes geringer ist, als die Länge des benachbarten talseitigen Transportbandes (12, 13).

9. Vorrichtung gemäß mindestens einem der Ansprüche 4 bis 8,
dadurch **gekennzeichnet,**
daß ein Geländer (30) vorgesehen ist, welches von der bergseitigen Begrenzung des Zuförderers ausgehend im sanften Bogen über das Überschubblech und teilweise über den Zwischenförderer geführt ist.

10. Vorrichtung gemäß mindestens einem der Ansprüche 4 bis 9,
dadurch **gekennzeichnet,**
daß ein Geländer (32) vorgesehen ist, welches zumindest über das am weitesten talseitig gelegene Transportband (13) des Zwischenförderers (10) geführt ist und welches in asymptotischem Bogen in das bergseitige Geländer des Abförderers übergeht.

11. Verwendung des Verfahrens gemäß mindestens einem der Ansprüche 1 bis 3 und/oder der Vorrichtung gemäß mindestens einem der Ansprüche 4 bis 10 zum Umformen einer mehrspurigen Reihe von Flaschen in eine einspurige Reihe.

12. Verwendung des Verfahrens gemäß mindestens einem der Ansprüche 1 bis 3 und/oder der Vorrichtung gemäß mindestens einem der Ansprüche 4 bis 9 zur Umformung einer mehrspurigen Reihe von Glasflaschen in eine einspurige Reihe.

**Claims**

1. Method for the conversion of a stream of upright containers conveyed in rows adjacent to each other on an input conveyor (2), to a single row conveyed away by an output conveyor (15), using an intermediate conveying device (10) consisting of several parallel conveyor belts (11, 12, 13), wherein the input conveyor, intermediate conveyor and output conveyor are inclined transversely to the direction of conveying in the transfer region to produce a sloping output drive, and wherein a support railing (22, 23, 25, 26) is provided which extends from the downstream side of the input conveyor over the conveyor belt of the output conveyor beyond the downstream side of the output conveyor, and wherein the speed of each upstream conveyor belt of the intermediate conveyor is lower than the speed of the adjacent conveyor belt downstream, characterised in that the containers arriving on the input conveyor are essentially moved onto a transfer plate (20), retaining their lane position, in that all the containers are then moved onto the intermediate conveyor, again essentially retaining their lane position, in that the containers when moved onto the intermediate conveyor are accelerated to a speed which is lower than the speed of the output conveyor, and in that the change of lane of the containers from the upstream conveyor belts of the intermediate conveyor to the downstream conveyor belts of the intermediate conveyor, and from the conveyor belt of the intermediate conveyor furthest downstream to the output conveyor, is effected essentially as a result of the sloping output drive produced by the angle of inclination.

2. Method according to claim 1, characterised in that the angle of inclination of input conveyor, intermediate conveyor and output conveyor to the horizontal is between 10 and 12°.

3. Method according to claim 1 or 2, characterised in that the speed of the slowest moving conveyor belt of the intermediate conveyor is greater than the speed of the input conveyor.

4. Apparatus for converting a stream of upright containers supplied in rows adjacent to each other on an input conveyor (2), to a single row which is conveyed away by an output conveyor (15), with an intermediate conveying device (10) consisting of several parallel conveyor belts (11, 12, 13), wherein the input conveyor, intermediate conveyor and output conveyor are inclined transversely to the direction of conveying in the transfer region to produce a sloping output drive, and wherein a support railing (22, 23, 25) is provided which extends from the downstream side of the input conveyor beyond the belt of the output conveyor to the downstream side of the output conveyor, and wherein the speed of each upstream conveyor belt of the intermediate conveyor is lower than the speed of the adjacent conveyor belt downstream, characterised in that the total width of the intermediate conveyor is equal to or greater than the total width of the input conveyor, in that the input conveyor butts directly against the intermediate conveyor over its whole width, wherein the upstream boundary of the input conveyor merges rectilinearly with the upstream boundary of the intermediate conveyor, in that between the input conveyor and the intermediate conveyor is provided a transfer plate (20), and in that the speed of the output conveyor is greater than the speed of the conveyor belt (13) of the intermediate conveyor furthest downstream.

5. Apparatus according to claim 4, characterised in that the angle of inclination of input conveyor, intermediate conveyor and output conveyor to the horizontal is between 10 and 12°.

6. Apparatus according to either of claims 4 or 5, characterised in that the output conveyor (15) is arranged parallel to the intermediate conveyor and in that its length in relation to the intermediate conveyor (10) is essentially such that its deflection facing towards the input conveyor (2) is located in the region of the transfer plate (20).

7. Apparatus according to one or more of claims 4 to 6, characterised in that the width of the input conveyor (2) is equal to the width of the intermediate conveyor (10).

8. Apparatus according to one or more of claims 4 to 7, characterised in that the conveyor belts (11, 12, 13) of the intermediate conveyor (10) have different lengths, wherein the length of each upstream (11, 12) conveyor belt is less than the length of the adjacent downstream conveyor belt (12, 13).

9. Apparatus according to one or more of claims 4 to 8, characterised in that a railing (30) is provided, which, starting from the upstream boundary of the input conveyor, extends in a gentle arc over the transfer plate and partially over the intermediate conveyor.

10. Apparatus according to one or more of claims 4 to 9, characterised in that a railing (32) is provided, which extends at least over the conveyor belt (13) of the intermediate conveyor (10) which is furthest downstream, and which merges in an asymptotic curve with the upstream railing of the output conveyor.

11. Use of the method according to one or more of claims 1 to 3 and/or the apparatus according to one or more of claims 4 to 10 for the conversion of a multi-lane row of bottles to a single-lane row.

12. Use of the method according to one or more of claims 1 to 3 and/or the apparatus according to one or more of claims 4 to 10 for the conversion of a multi-lane row of glass bottles to a single-lane row.


**Revendications**

1. Procédé pour convertir un flux de récipients en position debout disposés en plusieurs rangées juxtaposées et transportés sur un transporteur d'amenée (2) en une seule rangée évacuée par un transporteur d'évacuation (15), avec utilisation d'un système de transport intermédiaire (10) constitué de plusieurs bandes transporteuses (11, 12, 13) parallèles, le transporteur d'amenée, le transporteur intermédiaire et le transporteur d'évacuation étant inclinés transversalement par rapport à la direction de transport dans la zone de transfert pour créer un entraînement sur une pente, une rampe d'appui (22, 23, 25, 26) étant amenée du côté bas du transporteur d'amenée au côté bas du transporteur d'évacuation en passant sur la bande transporteuse du transporteur d'évacuation, et la vitesse de chaque bande transporteuse du transporteur intermédiaire disposée du côté haut étant inférieure à la vitesse de la bande transporteuse voisine située du côté bas,
caractérisé en ce que les récipients arrivant sur le transporteur d'amenée sont poussés sur une tôle de transfert (20), sensiblement en conservant leur piste, que tous les récipients sont alors poussés sur le transporteur intermédiaire, à nouveau sensiblement en conservant leur piste, que lors du transfert sur le transporteur intermédiaire, les récipients sont accélérés à une vitesse qui est inférieure à la vitesse du transporteur d'évacuation, et que le changement de piste des récipients des bandes transporteuses hautes du transporteur intermédiaire vers les bandes transporteuses basses dudit transporteur intermédiaire, et de la bande transporteuse du transporteur intermédiaire située le plus en bas vers le transporteur d'évacuation est provoqué essentiellement par l'entraînement sur une pente créé par l'angle d'inclinaison.

2. Procédé selon la revendication 1, caractérisé en ce que l'angle d'inclinaison du transporteur d'amenée, du transporteur intermédiaire et du transporteur d'évacuation par rapport à l'horizontale est de 10 à 12°.

3. Procédé selon l'une des revendications 1 ou 2, caractérisé en ce que la vitesse de la bande transporteuse du transporteur intermédiaire qui tourne le plus lentement est plus grande que la vitesse du transporteur d'amenée.

4. Dispositif pour convertir un flux de récipients en position debout amenés en rangées juxtaposées sur un transporteur d'amenée (2) en une seule rangée évacuée par un transporteur d'évacuation (15), comprenant un système de transport intermédiaire (10) constitué de plusieurs bandes transporteuses (11, 12, 13) parallèles, le transporteur d'amenée, le transporteur intermédiaire et le transporteur d'évacuation étant inclinés transversalement par rapport à la direction de transport dans la zone de transfert pour créer un entraînement sur une pente, une rampe d'appui (22, 23, 25) s'étendant du côté bas du transporteur d'amenée au côté bas du transporteur d'évacuation en passant sur la bande transporteuse du transporteur d'évacuation, et la vitesse de chaque bande transporteuse du transporteur intermédiaire disposée du côté haut étant inférieure à la vitesse de la bande transporteuse voisine située du côté bas, **caractérisé en ce** que la largeur totale du transporteur intermédiaire est égale ou supérieure à la largeur totale du transporteur d'amenée, que le transporteur d'amenée est raccordé bout à bout, sur toute sa largeur, au transporteur intermédiaire, la délimitation du côté haut du transporteur d'amenée se raccordant en ligne droite à la délimitation du côté haut du transporteur intermédiaire, qu'une tôle de transfert (20) est prévue entre le transporteur d'amenée et le transporteur intermédiaire, et que la vitesse du transporteur d'évacuation est plus grande que la vitesse de la bande transporteuse (13) du transporteur intermédiaire située le plus en bas.

5. Dispositif selon la revendication 4, caractérisé en ce que l'inclinaison du transporteur d'amenée, du transporteur intermédiaire et du transporteur d'évacuation par rapport à l'horizontale se situe entre 10 et 12°.

6. Dispositif selon l'une des revendications 4 ou 5, caractérisé en ce que le transporteur d'évacuation (15) est disposé parallèlement par rapport au transporteur intermédiaire, et que son extension longitudinale par rapport au transporteur intermédiaire (10) est choisie sensiblement de telle façon que sa déviation tournée vers le transporteur d'amenée (2) se situe dans la région de la tôle de transfert (20).

7. Dispositif selon l'une quelconque des revendications 4 à 6, caractérisé en ce que la largeur du transporteur d'amenée (2) est égale à la largeur du transporteur intermédiaire (10).

8. Dispositif selon l'une quelconque des revendications 4 à 7, caractérisé en ce que les bandes transporteuses (11, 12, 13) du transporteur intermédiaire (10) présentent des longueurs différentes, la longueur de chaque bande transporteuse située du côté haut (11, 12) étant plus faible que la longueur de la bande transporteuse voisine (12, 13) située du côté bas.

9. Dispositif selon l'une quelconque des revendications 4 à 8, caractérisé en ce qu'il comprend une rampe (30) qui, en partant de la délimitation côté haut du transporteur d'amenée, passe de manière légèrement cintrée sur la tôle de transfert et en partie sur le transporteur intermédiaire.

10. Dispositif selon l'une quelconque des revendications 4 à 9, caractérisé en ce qu'il comprend une rampe (32) qui passe au moins sur la bande transporteuse (13) du transporteur intermédiaire (10) située le plus en bas et qui se raccorde en un arc asymptotique à la rampe du côté haut du transporteur d'évacuation.

11. Mise en oeuvre du procédé selon l'une quelconque des revendications 1 à 3 et/ou du dispositif selon l'une quelconque des revendications 4 à 10 pour convertir plusieurs rangées de bouteilles en un seule rangée.

12. Mise en oeuvre du procédé selon l'une quelconque des revendications 1 à 3 et/ou du dispositif selon l'une quelconque des revendications 4 à 9 pour convertir plusieurs rangées de bouteilles de verre en une seule rangée.

Fig. 1

2   3   30   31   10   11 12 13

15   32

Fig. 2

EP 0 414 210 B1